# EUROPÄISCHE PATENTSCHRIFT

(11) **EP 2 005 700 B1**
(45) Veröffentlichungstag und Bekanntmachung des Hinweises auf die Patenterteilung: **29.08.2012**
(21) Anmeldenummer: 07727048.6
(22) Anmeldetag: 19.03.2007
(51) Int. Cl.: H04L 29/06, G06F 21/00

(54) **VERFAHREN ZUR ERMITTLUNG EINER AUFGABENERLAUBNIS**
A METHOD FOR IDENTIFYING A TASK AUTHORIZATION
PROCÉDÉ DE DÉTERMINATION D'UNE AUTORISATION DE TÂCHE

(30) Priorität: 11.04.2006 DE 102006017029; 02.08.2006 DE 102006036107
(43) Veröffentlichungstag der Anmeldung: 24.12.2008
(73) Patentinhaber: Siemens Enterprise Communications GmbH & Co. KG, 81379 München (DE)
(72) Erfinder: SCHWINGENSCHLÖGL, Christian, 85640 Putzbrunn (DE); BAHR, Michael, 81827 München (DE)
(74) Vertreter: Fritzsche, Thomas
(86) Internationale Anmeldenummer: PCT/EP2007/052570
(87) Internationale Veröffentlichungsnummer: WO 2007/118746

(56) Entgegenhaltungen:
- WO-A-03/029916
- "Mobile Commerce (M-COMM)" ETSI STANDARDS, EUROPEAN TELECOMMUNICATIONS STANDARDS INSTITUTE, SOPHIA-ANTIPO, FR, Bd. M-COMM, Nr. V113, August 2003 (2003-08), XP014016176 ISSN: 0000-0001
- WILLEM-JAN VAN DEN HEUVEL ET AL: "EFSOC: A Layered Framework for Developing Secure Interactions between Web-Services" DISTRIBUTED AND PARALLEL DATABASES, KLUWER ACADEMIC PUBLISHERS, BO, Bd. 18, Nr. 2, 1. September 2005 (2005-09-01), Seiten 115-145, XP019205702 ISSN: 1573-7578

## Beschreibung

Die Erfindung betrifft ein Verfahren zur Sicherung einer Übertragung einer Nachricht von einem ersten Netzwerkknoten an einen zweiten Netzwerkknoten sowie einen Netzwerkknoten. Selbstorganisierende Netze werden aktuell innerhalb von IEEE 802.11S standardisiert. Hierbei werden innerhalb der IEEE unterschiedliche Knotenklassen angedacht. Solche Knotenklassen sind beispielsweise:
- Mesh Point (MP)
- Mesh Access Point (MAP)
- Lightweight Mesh Point (LWMP)
- Station (STA)
- Mesh Portal (MPort).

Diese Knotenklassen, auch als Rollen bezeichnet, definieren Funktionen, die ein jeweiliger Netzwerkknoten im Netzwerk durchführen kann. Die Knotenklassen oder Rollen entsprechen somit den technischen Möglichkeiten eines jeweiligen Netzwerkknotens im Netzwerk.

WO 03/029916 A2 offenbart einen Gateway-Server, der das Vensalten der Verkehrs in einem drahtlasen Kommunikationsnetzwerk unterstützt.

Die der Erfindung zugrunde liegende Aufgabe ist es, ein Verfahren und einen Netzwerkknoten anzugeben, mit denen eine erhöhte Sicherheit bezüglich der Rollen gegeben ist.

Diese Aufgabe wird hinsichtlich des Verfahrens durch die Merkmale von Anspruch 1 und hinsichtlich des Netzwerkknotens durch die Merkmale von Anspruch 11 gelöst.

Das Verfahren zur Ermittlung einer Aufgabenerlaubnis für eine Aufgabe für einen ersten Netzwerkknoten weist folgende Schritte auf:
- Ermittlung einer der Aufgabe zugeordneten Sicherheitsanforderung;
- Prüfung, ob der erste Netzwerkknoten die Sicherheitsanforderung erfüllt;
- Wenn das nicht der Fall ist, Verweigerung der Aufgabenerlaubnis für den ersten Netzwerkknoten.

Bei dem Netzwerk kann es sich um ein drahtgebundenes Netzwerk oder ein drahtloses Netzwerk handeln. Drahtgebundene Netzwerke sind beispielsweise Ethernet-Netzwerke oder optische Netzwerke. Als drahtlose Netzwerke kommen beispielsweise WLAN-Netze, Adhoc-Netzwerke oder Mesh-Netzwerke in Frage. Das Netzwerk kann auch aus einer Mischung der genannten Möglichkeiten bestehen.

Ein Vorteil des erfindungsgemäßen Verfahrens besteht in einer erhöhten Sicherheit. Dies liegt daran, dass Aufgabenerlaubnis verweigert wird, wenn der erste Netzwerkknoten die Sicherheitsanforderung nicht erfüllt.

In einer bevorzugten Ausgestaltung der Erfindung umfasst die Aufgabe den Empfang einer durch einen Netzwerkknoten an den ersten Netzwerkknoten zu sendenden Nachricht. Bevorzugt schließt die Verweigerung eine Unterbindung einer Versendung der Nachricht vom Netzwerkknoten an den ersten Netzwerkknoten ein.

Hierdurch wird erreicht, dass die Sicherheit bei der Übertragung von Nachrichten gesteigert wird. Der Netzwerkknoten prüft für die Übertragung der Nachricht die der Nachricht zugeordnete Sicherheitsanforderung. Erfüllt der erste Netzwerkknoten diese nicht, so wird die Versendung der Nachricht an diesen unterbunden.

In einer vorteilhaften Ausgestaltung der Erfindung wird die Ermittlung der Sicherheitsanforderung anhand eines Typs der Nachricht durchgeführt. Möglichkeiten für den Typ der Nachricht bestehen bspw. darin:
- eine für den ersten Netzwerkknoten bestimmte Nachricht;
- eine zur Weiterleitung durch den ersten Netzwerkknoten bestimmte Nachricht;
- eine Routennachricht, insbesondere eine Route-Request-oder Route-Reply-Nachricht;
- eine Nachricht von einem Mesh-unfähigen weiteren Netzwerkknoten zur Weiterleitung in ein Mesh-Netzwerk.

In einer alternativen Ausgestaltung der Erfindung umfasst die Aufgabe eine Weiterleitung einer Nachricht eines Netzwerkknotens durch den ersten Netzwerkknoten. Bevorzugt umfasst die Verweigerung eine Nichteintragung und/oder Entfernung des Netzwerkknotens aus einer Weiterleitungstabelle des Netzwerkknotens.

Hierdurch kann erreicht werden, dass ein erster Netzwerkknoten, der die Sicherheitsanforderung nicht erfüllt, für eine Weiterleitung von Nachrichten bspw. zu einem späteren Zeitpunkt nicht verwendet wird. Durch die Austragung aus der Weiterleitungstabelle ist eine erneute Prüfung der Sicherheitsanforderung zu dem späteren Zeitpunkt nicht mehr nötig.

Es ist zweckmäßig, dass die Prüfung durch den Netzwerkknoten durchgeführt wird. Hierdurch wird erreicht, dass nur eine geringe Belastung des Netzwerks mit zusätzlichen Nachrichten

In einer vorteilhaften Ausgestaltung der Erfindung wird zur Prüfung der Sicherheitsanforderung ein Zertifikat des ersten Netzwerkknotens verwendet, insbesondere ein Zertifikat gemäß X.509v3. Bevorzugt weist das Zertifikat Attribute auf, anhand derer die Prüfung durchgeführt wird.

Die Verwendung eines Attributzertifikats hat den Vorteil, dass hiermit neben der Zertifizierung einer Identität auch eine Zertifizierung von einer mit der Identität verbundenen bestimmten Eigenschaft, d.h. Attribut, möglich ist. So ist es beispielsweise möglich, einem Netzwerkknoten ein Zertifikat mit einem Attribut "Mesh Portal" auszustellen.

Bevorzugt wird als Aufgabenerlaubnis eine Netzwerkknotenklasse verwendet, insbesondere eine der folgenden Netzwerkknotenklassen:
- Mesh Point;
- Mesh Access Point;
- Lightweight Mesh Point;
- Station;
- Mesh Portal.

Hierdurch entsteht der Vorteil, dass dem zweiten Netzwerkknoten eine klare Rolle, d.h. eine Knotenklasse, zugewiesen ist, und gleichzeitig über die Prüfung der Sicherheitsanforderung eine Sicherung der Übertragung der Nachricht gewährleistet ist. Hierdurch wird weiterhin erreicht, dass ein Netzwerkknoten nicht immer seine vollen technischen Möglichkeiten im Netzwerk ausführen kann.

Der Netzwerkknoten weist eine Prozessiereinheit auf, die derart ausgestaltet ist, dass zur Ermittlung einer Aufgabenerlaubnis für eine Aufgabe für einen ersten Netzwerkknoten eine Ermittlung einer der Aufgabe zugeordneten Sicherheitsanforderung, eine Prüfung, ob der erste Netzwerkknoten die Sicherheitsanforderung erfüllt und wenn das nicht der Fall ist, eine Verweigerung der Aufgabenerlaubnis für den ersten Netzwerkknoten durchführbar ist.

Der Netzwerkknoten kann bspw. ein VoIP-fähiges Telefon, ein Laptop, ein Mobiltelefon, ein PDA oder ein Drucker sein. Weitere Möglichkeiten bestehen in einem Computer, einem Router oder einem Gateway.

Bevorzugt ist der Netzwerkknoten derart ausgestaltet, dass die Verweigerung eine Nichteintragung oder Entfernung des ersten Netzwerkknotens aus einer Weiterleitungstabelle des Netzwerkknotens umfasst.

In einer bevorzugten Ausgestaltung des Netzwerkknotens umfasst die Aufgabe den Empfang einer durch einen Netzwerkknoten an den ersten Netzwerkknoten zu sendenden Nachricht und die Verweigerung eine Unterbindung einer Versendung der zu sendenden Nachricht.

Das Netzwerk weist wenigstens einen erfindungsgemäßen Netzwerkknoten auf. Bevorzugt ist es als Adhoc-Netzwerk oder Mesh-Netzwerk ausgestaltet.

Weitere Einzelheiten und Vorteile der Erfindung werden anhand der Zeichnung erläutert. Dabei zeigen:

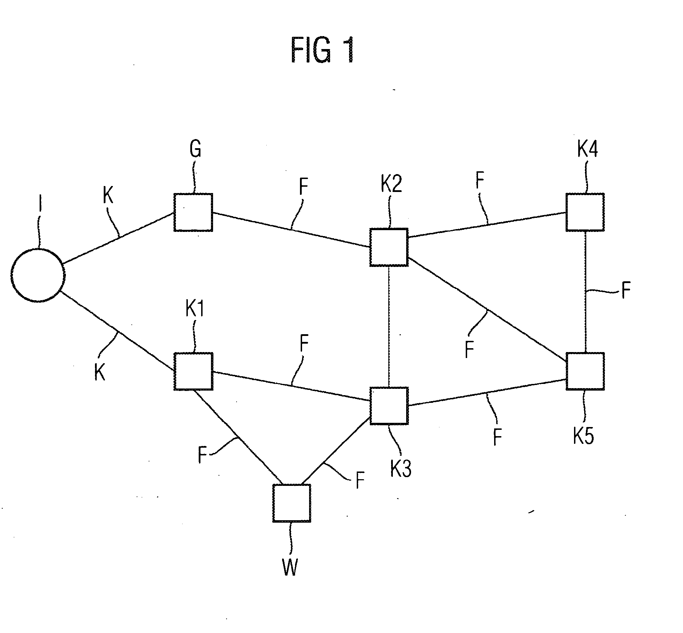

- Figur 1: ein Mesh-Netzwerk.

Das in Figur 1 dargestellte beispielhafte Netzwerk, anhand dessen Ausführungsformen des erfindungsgemäßen Verfahrens dargestellt wird, besteht aus einem ersten bis fünften Netzwerkknoten K1 ... K5, einem Gateway G und einem WLAN-fähigen Netzwerkknoten W. Weiterhin ist in Figur 1 schematisch das Internet I dargestellt, verbunden mit dem Gateway G und dem ersten Netzwerkknoten K1.

In dem Netzwerk bestehen drahtlose Verbindungen F zwischen dem Gateway G und dem zweiten Netzwerkknoten K2, zwischen dem zweiten Netzwerkknoten K2 und dem vierten, fünften und dritten Netzwerkknoten K4, K5, K3, zwischen dem vierten Netzwerkknoten K4 und dem fünften Netzwerkknoten K5, zwischen dem fünften Netzwerkknoten K5 und dem dritten Netzwerkknoten K3, zwischen dem ersten Netzwerkknoten K1 und dem dritten Netzwerkknoten K3, sowie zwischen dem WLAN-fähigen Netzwerkknoten W und dem ersten und dritten Netzwerkknoten K1, K3. Weiterhin bestehen kabelgebundene Verbindungen K zwischen dem Internet I und dem Gateway G sowie zwischen dem Internet I und dem ersten Netzwerkknoten K1.

Jedem der Netzwerkknoten K1 ... K5 sowie dem Gateway G und dem WLAN-fähigen Netzwerkknoten W ist jeweils ein Attributzertifikat zugeordnet. Diese werden geprüft, um eine Zuordnung von Rollen, d.h. Netzwerkknotenklassen, zu den Netzwerkknoten K1 ... K5, dem Gateway G und dem WLAN-fähigen Netzwerkknoten W zu erlauben.

Der WLAN-fähige Netzwerkknoten W ist nicht meshnetzwerkfähig. Um mit dem Mesh-Netzwerk, d.h. den Netzwerkknoten K1 ... K5 oder dem Gateway G oder dem Internet I kommunizieren zu können, muss der WLAN-fähige Netzwerkknoten W Zugriff auf das Mesh-Netzwerk erhalten. Hierzu ist ein Netzwerkknoten K1 ... K5 mit einer technischen Befähigung, als Mesh Access Point (MAP) funktionieren zu können, und mit der Erlaubnis hierzu nötig. Weiterhin muss dieser Netzwerkknoten K1, K3 in direkter Verbindung mit dem WLAN-fähigen Netzwerkknoten W stehen. In diesem beispielhaften Netzwerk sollen der erste und dritte Netzwerkknoten K1, K3 technisch in der Lage sein, dem WLAN-fähigen Netzwerkknoten W Zugriff auf das Mesh-Netzwerk zu ermöglichen. Weiterhin soll aber nur der erste Netzwerkknoten K1 in seinem Attributzertifikat das Attribut "Mesh Access Point" aufweisen. Der dritte Netzwerkknoten K3 weist dieses Attribut in seinem Attributzertifikat nicht auf. Das bedeutet, dass der dritte Netzwerkknoten K3 die Rolle, d.h. Netzwerkknotenklasse, eines Mesh Access Points nicht übernehmen darf. Der WLAN-fähige Netzwerkknoten W übernimmt die Prüfung des entsprechenden Attributzertifikats. Beispielsweise möchte der WLAN-fähige Netzwerkknoten W eine Nachricht an den vierten Netzwerkknoten K4 versenden. Dem WLAN-fähigen Netzwerkknoten W ist weiterhin das Vorhandensein des ersten und dritten Netzwerkknotens K1, K3 bekannt. Er prüft nun als erstes das Attributzertifikat des dritten Netzwerkknotens K3, indem er eine Nachricht an diesen Netzwerkknoten K3 versendet und das Attributzertifikat als Antwort vom dritten Netzwerkknoten K3 erhält. Eine Überprüfung des Attributzertifikats ergibt, dass der dritte Netzwerkknoten K3 die Rolle eines Mesh Access Point nicht übernehmen darf. Der WLAN-fähige Netzwerkknoten W versendet deshalb die Nachricht nicht an den dritten Netzwerkknoten K3. Eine gleichartige Prüfung des ersten Netzwerkknotens K1 ergibt, dass der erste Netzwerkknoten K1 die Rolle des Mesh Access Point übernehmen darf. Der WLAN-fähige Netzwerkknoten W sendet daher seine an den vierten Netzwerkknoten K4 gerichtete Nachricht an den ersten Netzwerkknoten K1, der sie, beispielsweise über den dritten und fünften Netzwerkknoten K3, K5 an den vierten Netzwerkknoten K4 weiterleitet.

Zur Weiterleitung von Nachrichten des WLAN-fähigen Netzwerkknotens W an den vierten Netzwerkknoten K4 über den ersten Netzwerkknoten K1 sind beim dritten und fünften Netzwerkknoten K3, K5 weitere Rollen notwendig. In diesem Fall handelt es sich um die Rolle des Mesh Points (MP). Bevor der erste Netzwerkknoten K1 die Nachricht des WLAN-fähigen Netzwerkknotens W an den dritten Netzwerkknoten K3 weiterleitet, überprüft er, ob der dritte Netzwerkknoten K3 die Rolle eines Mesh Points erfüllen darf. Der erste und dritte Netzwerkknoten K1, K3 sind Mitglieder des Mesh-Netzwerks. Der erste Netzwerkknoten K1 führt den dritten Netzwerkknoten K3 daher in einer Routing-Tabelle. In dieser Routing-Tabelle ist weiterhin gespeichert, welche Rollen der dritte Netzwerkknoten K3 anhand seines Attributzertifikats erfüllen darf. Im gegebenen Beispiel soll der dritte Netzwerkknoten K3 die Rolle eines Mesh Points annehmen dürfen. Das bedeutet, dass der dritte Netzwerkknoten K3 die Nachricht vom WLAN-fähigen Netzwerkknoten W weiterleiten darf innerhalb des Mesh-Netzwerks. Es wird also in diesem Ausführungsbeispiel sichergestellt, dass der dritte Netzwerkknoten K3 zwar nicht die Anbindung von lediglich WLAN-fähigen Netzwerkknoten W an das Mesh-Netzwerk vornehmen darf, jedoch Nachrichten, auch solche vom WLAN-fähigen Netzwerkknoten W im Mesh-Netzwerk weiterleiten darf, wenn sie also nicht direkt vom WLAN-fähigen Netzwerkknoten W kommen. Der erste Netzwerkknoten K1 sendet die Nachricht daher zum dritten Netzwerkknoten K3. Analog prüft der dritte Netzwerkknoten K3, ob der fünfte Netzwerkknoten K5 die Nachricht weiterleiten darf. Da auch der fünfte Netzwerkknoten K5 in diesem Beispiel die Rolle eines Mesh Points annehmen darf, sendet der dritte Netzwerkknoten K3 an den fünften Netzwerkknoten K5. Zur Weiterleitung der Nachricht an den vierten Netzwerkknoten K4, für den die Nachricht bestimmt ist, bedarf es keiner weiteren Prüfung.

Im gegebenen Beispiel für die Nachricht des WLAN-fähigen Netzwerkknotens W wurde davon ausgegangen, dass jeder der auf dem Weg liegenden Netzwerkknoten K1, K3, K5 den Pfad zum vierten Netzwerkknoten, d.h. den nächsten Netzwerkknoten auf der Wegstrecke kennt. Ist dies jedoch nicht der Fall, muss ein Routing-Algorithmus durchgeführt werden. Wird das Routing-Protokoll Ad hoc On-Demand Distance Vector (AODV) verwendet, so werden zur Routenfindung vom Ausgangsknoten Route-Request-Nachrichten versendet. Erreichen diese den jeweiligen Zielknoten K1 ... K5 oder einen anderen Netzwerkknoten K1 ... K5, der eine Route zum Zielknoten K1 ... K5 kennt, so werden Route-Reply-Messages zurück zum Ausgangsknoten gesendet. In diesem Ausführungsbeispiel des erfindungsgemäßen Verfahrens wird bereits vor Versendung der Route-Request-Nachrichten jeweils geprüft, ob ein empfangender Netzwerkknoten K1 ... K5 überhaupt die Rolle eines Mesh Points zur Weiterleitung von Nachrichten annehmen darf. Tut ein jeweiliger Netzwerkknoten K1 ... K5 das nicht, so wird die Route-Request-Nachricht nicht versendet. Hierdurch wird vermieden, dass Routen gefunden werden, die einen Netzwerkknoten enthalten, der nicht die notwendige Berechtigung aufweist, da eine Weiterleitung von Nachrichten über so eine Route nicht erfolgreich wäre.

Es ist auch möglich, in einer Ausführungsvariante in den Route-Reply-Nachrichten zu überprüfen, ob ein entsprechender Netzwerkknoten die nötige Berechtigung zur Annahme einer Rolle als Mesh Point hat. Da eine Route-Reply-Nachricht normalerweise als Unicast-Nachricht versendet wird, muss hier dafür gesorgt werden, dass überhaupt ein Pfad gefunden wird. Hierzu können beispielsweise mehrere Route-Reply-Nachrichten versendet werden. Eine andere Möglichkeit besteht darin, eine wiederholte Durchführung des Routing-Verfahrens mit Route-Request- und Route-Reply-Nachrichten durchzuführen, bis ein passender Pfad gefunden wird.

Eine weitere zu überprüfende Rolle stellt die Rolle des Mesh Portals dar. Ein Netzwerkknoten mit der Mesh Portal-Rolle kann eine Verbindung zwischen Netzwerkknoten K1 ... K5 im Mesh-Netzwerk und Netzwerkknoten in einem externen Netz, wie beispielsweise dem Internet I zur Verfügung stellen. Um dafür zu sorgen, dass auch diese Funktionalität nur von hierzu berechtigten Netzwerkknoten K1 ... K5 angeboten werden kann, wird von jedem Netzwerkknoten K1 ... K5, der eine Nachricht an das Internet I versenden will, das Attributzertifikat des jeweils nächsten weiterleitenden Netzwerkknotens K1 ... K5 überprüft, wenn zwischen dem Internet I und dem aktuellen Netzwerkknoten K1 ... K5 lediglich ein weiter Hop im Mesh-Netzwerk besteht. Diese Voraussetzung ist erfüllt, wenn der nächste folgende weiterleitende Netzwerkknoten K1 ... K5, G technisch gesehen ein Mesh Portal darstellt. In diesem Fall muss überprüft werden, ob dieser Netzwerkknoten auch die Rolle des Mesh Portals annehmen darf.

Hierzu wird ein Beispiel gegeben, in dem der dritte Netzwerkknoten K3 eine Nachricht in das Internet I versenden möchte. Es bestehen im gegebenen beispielhaften Netzwerk zwei Möglichkeiten. Zum einen kann die Nachricht über das Gateway G an das Internet I versendet werden, zum anderen über den ersten Netzwerkknoten K1.

Es ist jedoch in diesem Beispiel so, dass lediglich das Gateway G eine Berechtigung in seinem Attributzertifikat aufweist, als Mesh Portal agieren zu dürfen. Der erste Netzwerkknoten K1 weist dieses Attribut in seinem Attributzertifikat nicht auf. Der erste Netzwerkknoten K1 darf daher trotz seiner Anbindung an das Internet I keine Nachrichten aus dem Mesh Netzwerk an das Internet I weiterleiten. Der dritte Netzwerkknoten K3 stellt nun beispielsweise fest, dass der Weg zum Internet I über den ersten Netzwerkknoten K1 am kürzesten ist. Vor der Versendung der Nachricht an den ersten Netzwerkknoten K1 überprüft er jedoch das Attributzertifikat des ersten Netzwerkknotens K1. Da der erste Netzwerkknoten K1 bereits derjenige Netzwerkknoten wäre, der die Weiterleitung in das Internet I vornehmen müsste, wird das Attributzertifikat des ersten Netzwerkknotens K1 durch den dritten Netzwerkknoten k3 dahingehend überprüft, ob der erste Netzwerkknoten K1 die Rolle eines Mesh Portals annehmen darf. Dies ist nicht der Fall. Der dritte Netzwerkknoten K3 muss daher eine andere Route für seine Nachricht in das Internet I suchen. So eine Route bietet sich beispielsweise über den zweiten Netzwerkknoten K2 und das Gateway G. Nun ist wie oben beschrieben eine Überprüfung fällig, ob der zweite Netzwerkknoten K2 die Funktion eines Mesh Points übernehmen darf, um die Nachricht überhaupt an das Gateway G weiterleiten zu dürfen. Dies ist der Fall. Die Nachricht wird daher an den zweiten Netzwerkknoten K2 übermittelt.

Eine Überprüfung, ob der zweite Netzwerkknoten K2 Mesh Portal Funktionalität annehmen darf, muss vom dritten Netzwerkknoten K3 nicht durchgeführt werden. Dies liegt daran, dass vom dritten Netzwerkknoten K3 bis zum Gateway G noch zwei links des Mesh Netzes zu überwinden sind. Das wiederum bedeutet, dass der zweite Netzwerkknoten K2 nicht derjenige Netzwerkknoten ist, der für eine direkte Weiterleitung der Nachricht ins Internet I sorgt.

Der zweite Netzwerkknoten K2 wiederum muss für das Gateway G prüfen, ob dieses die Mesh Portal Funktion ausführen darf. Laut dem Attributzertifikat des Gateways G ist dieses zur Ausführung der Rolle des Mesh Portals berechtigt. Daher darf der zweite Netzwerkknoten K2 die Nachricht an das Gateway G weiterleiten. Das Gateway G wiederum sorgt für eine Weiterleitung der Nachricht ins Internet I.

Der zweite Netzwerkknoten K2 muss für die Nachricht des dritten Netzwerkknotens K wissen oder feststellen können, dass er als Ziel das Internet I hat. Dies ist beispielsweise anhand des Adressbereichs der Zieladresse des der Nachricht erkennbar.

Zur Überprüfung der Rolle des Mesh Portals bietet sich eine weitere Ausführungsvariante an. Bei dieser Alternative müssen alle Netzwerkknoten, die eine Mesh Portal Funktion anbieten wollen, d. h. die die Netzwerkknotenklasse des Mesh Portals einnehmen wollen, Nachrichten in das Netzwerk versenden, mit denen sie sich und ihre Funktion bekannt machen. In dieser Alternative werden diese Nachrichten nur akzeptiert, wenn eine gleichzeitige Überprüfung ihres Attributzertifikats durch die anderen Netzwerkknoten K1 ... 5 des Netzwerks erfolgreich ist, d. h. wenn der entsprechende Netzwerkknoten die Mesh Portal Funktionalität anbieten darf.

In einer weiteren Variante wird zur Auffindung von Mesh Portal Netzwerkknoten ein ähnlicher Mechanismus verwendet wie bei der Routenfindung mittels Route Request und Route reply Nachrichten. Das bedeutet, das ein Netzwerkknoten K1 ... 5, der eine Nachricht beispielsweise in das Internet I versenden will, beispielsweise Mesh Portal Request Nachrichten in das Netzwerk versendet. Mesh Portal reply Nachrichten werden jedoch nur versendet, wenn ein weiterer Netzwerkknoten K1 ... 5 als Nachbarknoten einen Mesh Portal Netzwerkknoten aufweist. Weiterhin werden die Mesh Portal reply Nachrichten nur versendet, wenn für den Nachbarknoten auch überprüft worden ist, ob sein Attributzertifikat die Einnahme der Rolle als Mesh Portal erlaubt.

Mittels des erfindungsgemäßen Verfahrens und beispielsweise der beschriebenen Ausführungsmöglichkeiten des erfindungsgemäßen Verfahrens wird eine Durchsetzung unterschiedlicher Rollen von Netzwerkknoten in beispielsweise Multi-Hop-Mesh-Netzwerken und damit beispielsweise die Realisierung von für Enterprise Netzwerke notwendigen Sicherheitsmerkmalen ermöglicht. Über die Definition von zusätzlichen Attributen, die beispielsweise weitere Rolle beschreiben, besteht auch die Möglichkeit, ein wesentlich feineres Sicherheitsmanagement zu gestatten. Weiterhin sind die eingesetzten Attributzertifikate auch für die Absicherung von Diensten auf höheren Schichten verwendbar, beispielsweise die Zertifizierung von Komponenten und Diensten in Service Discovery Protokollen.

Eine zweite Ausführungsform der Erfindung besteht darin, dass Weiterleitungstabellen für Nachrichten in passiver Weise erstellt werden bei den Netzwerkknoten K1 ... 5. In passiver Weise bedeutet, dass zur Erstellung der Weiterleitungstabellen in der Hauptsache Beacon-Nachrichten verwendet werden.

Ein Netzwerkknoten K1 ... 5 nimmt die Beacon-Nachrichten (Beacons), die er empfangen kann, auf, und erstellt hieraus eine Weiterleitungstabelle. Die Beacons enthalten in dieser zweiten Ausführungsform jeweils das Sicherheitszertifikat des sendenden Netzwerkknotens K1 ... 5. Ein Netzwerkknoten K1 ... 5, der einen Beacon empfängt, fügt den sendenden Netzwerkknoten K1 ... 5 nur dann in seine Weiterleitungstabelle ein, wenn dieser die Sicherheitsanforderung zur Weiterleitung erfüllt, d.h. wenn sein Attributzertifikat die Rolle Mesh Point enthält als Attribut enthält.

Hierdurch wird erreicht, dass eine Weiterleitung von Nachrichten später ohne neue Überprüfung des Attributzertifikats erfolgen kann, da nur solche Netzwerkknoten K1 ... 5 in der Weiterleitungstabelle stehen, die für eine Weiterleitung überhaupt in Frage kommen.

Hier ist es zweckmäßig, für verschiedene Rollen, d.h. Knotenklassen, verschiedene Weiterleitungstabellen zu führen. So kann eine erste Weiterleitungstabelle für die Weiterleitung von Nachrichten innerhalb des Meshnetzwerks verwendet werden, d.h. die erste Weiterleitungstabelle enthält lediglich Netzwerkknoten K1 ... 5, die die Rolle Mesh Point einnehmen dürfen. Eine zweite Weiterleitungstabelle dient der Aufnahme von solchen Netzwerkknoten K1 ... 5, die die Rolle Mesh Portal oder Mesh Access Point ausüben dürfen. Je nach gestellter Aufgabe kann ein Netzwerkknoten K1 ... 5 in einer der Weiterleitungstabellen nachsehen, welchem Netzwerkknoten K1 ... 5 er eine gegebene Nachricht weiterleiten darf.

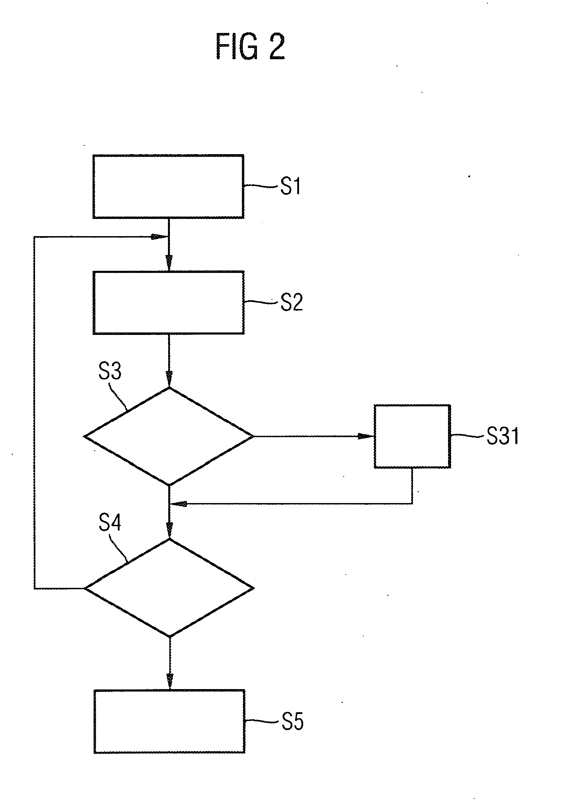

Figur 2 zeigt einen beispielhaften Ablauf eines Prozesses, der in einem Netzwerkknoten K1 ... 5 abläuft, wenn eine Nachricht von diesem Netzwerkknoten K1 ... 5 an einen Zielknoten versendet werden soll. Hierbei kann die Nachricht vom Netzwerkknoten K1 ... 5 selbst stammen oder bereits zur Weiterleitung an diesen gesendet worden sein. Der Prozess wird so ablaufen, wenn der Zielknoten für den Netzwerkknoten K1 ... 5 nicht direkt erreichbar ist, d.h. wenn eine Weiterleitung durch einen Zwischenknoten erforderlich ist.

In einem ersten Schritt S1 erhält der Netzwerkknoten K1 ... 5 die Nachricht zur Weiterleitung. In einem zweiten Schritt S2 entscheidet der Netzwerkknoten K1 ... 5, an welchen Zwischenknoten die Nachricht weiterzuleiten ist. Diese Entscheidung kann bspw. auf Basis einer Weiterleitungstabelle getroffen werden. In einem darauf folgenden dritten Schritt S3 prüft der Netzwerkknoten K1 ... 5, ob ihm für den Zwischenknoten ein Attributzertifikat bekannt ist. Ist dies nicht der Fall, so wird in einem Zwischenschritt S31 versucht, dieses Attributzertifikat zu bekommen. Das passiert, indem eine Anfrage-Nachricht an den Zwischenknoten übermittelt wird, worin der Zwischenknoten aufgefordert wird, sein Attributzertifikat in einer Antwortnachricht dem Netzwerkknoten K1 ... 5 zuzusenden.

Mit dem nun bekannten Attributzertifikat prüft der Netzwerkknoten K1 ... 5 in einem vierten Schritt S4, ob das Attributzertifikat das für die Weiterleitung nötige Attribut aufweist, d.h. ob der Zwischenknoten die Weiterleitung vornehmen darf. Ist das nicht der Fall, so kehrt der Netzwerkknoten K1 ... 5 zum zweiten Schritt S2 zurück und versucht, einen anderen Zwischenknoten zu finden.

Darf der Zwischenknoten jedoch die Aufgabe übernehmen, so sendet der Netzwerkknoten K1 ... 5 in einem fünften Schritt die Nachricht an den Zwischenknoten.

## Patentansprüche

1. Verfahren zur Ermittlung einer Aufgabenerlaubnis für eine Aufgabe für einen ersten Netzwerkknoten (K1...5) mit den Schritten (S2, 4):
- Ermittlung einer der Aufgabe zugeordneten Sicherheitsanforderung (S4);
- Prüfung, ob der erste Netzwerkknoten (K1...5) die Sicherheitsanforderung erfüllt (S4), wobei ermittelt wird, ob der erste Netzwerkknoten (K1...5) eine Befähigung hat, die Aufgabe zu übernehmen;
- wenn das nicht der Fall ist, eine Verweigerung der Aufgabenerlaubnis für den ersten Netzwerkknoten (K1...5) und eine Auffindung eines anderen Netzwerkknotens für die Aufgabe durchgeführt wird.

2. Verfahren nach Anspruch 1, wobei die Aufgabe den Empfang einer durch einen Netzwerkknoten (K1...5) an den ersten Netzwerkknoten (K1...5) zu sendenden Nachricht umfasst.

3. Verfahren nach Anspruch 2, wobei die Verweigerung eine Unterbindung einer Versendung der Nachricht vom Netzwerkknoten (K1...5) an den ersten Netzwerkknoten (K1...5) einschließt.

4. Verfahren nach Anspruch 2 oder 3, wobei die Ermittlung der Sicherheitsanforderung anhand eines Typs der Nachricht durchgeführt wird, insbesondere wenigstens eines der folgenden Typen:
- eine für den ersten Netzwerkknoten (K1...5) bestimmte Nachricht;
- eine zur Weiterleitung durch den ersten Netzwerkknoten (K1...5) bestimmte Nachricht;
- eine Routennachricht, insbesondere eine Route-Request-oder Route-Reply-Nachricht;
- eine Nachricht von einem Mesh-unfähigen weiteren Netzwerkknoten (K1...5) zur Weiterleitung in ein Mesh-Netzwerk.

5. Verfahren nach Anspruch 1, wobei die Aufgabe eine Weiterleitung einer Nachricht eines Netzwerkknotens (K1...5) durch den ersten Netzwerkknoten umfasst.

6. Verfahren nach Anspruch 5, wobei die Verweigerung eine Nichteintragung und/oder Entfernung des Netzwerkknotens (K1...5) aus einer Weiterleitungstabelle des Netzwerkknotens (K1...5) umfasst.

7. Verfahren nach einem der Ansprüche 2 bis 6, wobei die Prüfung durch den Netzwerkknoten (K1...5) durchgeführt wird.

8. Verfahren nach einem der vorangehenden Ansprüche, wobei zur Prüfung der Sicherheitsanforderung ein Zertifikat des ersten Netzwerkknotens (K1...5) verwendet wird, insbesondere ein Zertifikat gemäß X.509v3.

9. Verfahren nach Anspruch 8, wobei das Zertifikat Attribute aufweist, anhand derer die Prüfung durchgeführt wird.

10. Verfahren nach einem der vorangehenden Ansprüche, wobei als Aufgabenerlaubnis eine Netzwerkknotenklasse verwendet wird, insbesondere eine der folgenden Netzwerkknotenklassen:
- Mesh Point;
- Mesh Access Point;
- Lightweight Mesh Point;
- Station;
- Mesh Portal.

11. Netzwerkknoten (K1...5) mit einer Prozessiereinheit, derart ausgestaltet, dass zur Ermittlung einer Aufgabenerlaubnis für eine Aufgabe für einen ersten Netzwerkknoten (K1...5) eine Ermittlung einer der Aufgabe zugeordneten Sicherheitsanforderung, eine Prüfung, ob der erste Netzwerkknoten (K1...5) die Sicherheitsanforderung erfüllt, wobei ermittelt wird, ob der erste Netzwerkknoten (K1...5) eine Befähigung hat, die Aufgabe zu übernehmen, und, wenn das nicht der Fall ist, eine Verweigerung der Aufgabenerlaubnis für den ersten Netzwerkknoten (K1...5) und eine Auffindung eines anderen Netzwerkknotens für die Aufgabe durchführbar ist.

12. Netzwerkknoten (K1...5) nach Anspruch 11, wobei die Verweigerung eine Nichteintragung oder Entfernung des ersten Netzwerkknotens (K1...5) aus einer Weiterleitungstabelle des Netzwerkknotens (K1...5) umfasst.

13. Netzwerkknoten (K1...5) nach Anspruch 11, wobei die Aufgabe den Empfang einer durch einen Netzwerkknoten (K1...5) an den ersten Netzwerkknoten (K1...5) zu sendenden Nachricht umfasst und die Verweigerung eine Unterbindung einer Versendung der zu sendenden Nachricht einschließt.

14. Netzwerk mit wenigstens einem Netzwerkknoten (K1...5) gemäß einem der Ansprüche 11 bis 13.

15. Netzwerk gemäß Anspruch 14, ausgestaltet als Adhoc-Netzwerk oder Mesh-Netzwerk.

## Claims

1. Process for determining a task permission for a task for a first network node (K1 ... 5) with the steps (S2, 4):
- Establishing a security requirement allocated to the task (S4);
- Check whether the first network node (K1 ... 5) meets the security requirement (54) whereby it is established whether the first network node (K1 ... 5) is allowed to take on the task;
- if not, a refusal of the task permission for the first network node (K1 ... 5) and a search for another network node for the task is carried out.

2. Process according to claim 1 whereby the task includes the receipt of a message to be sent by a network node (K1 ... 5) to the first network node (K1 ... 5).

3. Process according to claim 2 whereby the refusal includes the forbidding of the sending of the message from network node (K1 ... 5) to the first network node (K1 ... 5).

4. Process according to claim 2 or 3 whereby the establishment of the security requirement is carried out on the basis of the message type, in particular at least one of the following types:
- a message intended for the first network node (K1 ... 5);
- a message intended to be forwarded by the first network node (K1 ... 5);
- a route message, in particular a route-request or route-reply message;
- a message from another network node (K1 ... 5) not mesh-capable, to be forwarded to a mesh network.

5. Process according to claim 1, whereby the task includes the forwarding of a message of a network node (K1 ... 5) by the first network node.

6. Process according to claim 5 whereby the refusal includes a non-recording and / or removal of the network node (K1 ... 5) from a forwarding table of the network node (K1 ... 5).

7. Process according to any one of claims 2 to 6, whereby the check is carried out by the network node (K1 ... 5).

8. Process according to any one of the preceding claims, whereby to check the security requirement, a certificate of the first network node (K1 ... 5) is used, in particular a certificate in accordance with X.509v3.

9. Process according to claim 8 whereby the certificate contains attributes on the basis of which the check is carried out.

10. Process according to any one of the preceding claims, whereby a network node class is used as a task permission, in particular one of the following network node classes:
- Mesh Point;
- Mesh Access Point;
- Lightweight Mesh Point;
- Station;
- Mesh Portal.

11. Network node (K1 ... 5) with a processor unit designed such that, to establish a task permission for a task for a first network node (K1 ... 5), the establishment of a security requirement allocated to the task, a check whether the first network node (K1 ... 5) meets the security requirement, whereby it is established whether the first network node (K1 ... 5) is able to take on the task and, if this is not the case, a refusal of the task permission for the first network node (K1 ... 5) and a search for another network node for the task can be carried out.

12. Network node (K1 ... 5) according to claim 11 whereby the refusal includes a non-recording or removal of the first network node (K1 ... 5) from a forwarding table of the network node (K1 ... 5).

13. Network node (K1 ... 5) according to claim 11, whereby the task includes the receipt of a message to be sent by a network node (K1 ... 5) to the first network node (K1 ... 5) and the refusal includes the forbidding of the sending of the message to be sent.

14. Network with at least one network node (K1 ... 5) according to any one of claims 11 to 13.

15. Network according to claim 14, designed as an ad hoc network or mesh network.

## Revendications

1. Procédé de détermination d'une autorisation de tâche pour une tâche pour un premier noeud de réseau (K1 ... 5) comportant les étapes suivantes (S2, 4) consistant à :
- déterminer une exigence en matière de sécurité (S4) associée à la tâche ;
- contrôler si le premier noeud de réseau (K1 ... 5) répond à l'exigence en matière de sécurité (S4), sachant qu'on détermine si le premier noeud de réseau (K1 ... 5) est en mesure de prendre en charge la tâche ;
- si ce n'est pas le cas, on procède au refus d'autorisation de tâche pour le premier noeud de réseau (K1 ... 5) et on procède à la recherche d'un autre noeud de réseau pour la tâche.

2. Procédé selon la revendication 1, sachant que la tâche comporte la réception d'une information à transmettre au premier noeud de réseau (K1 ... 5) par un noeud de réseau (K1 ... 5).

3. Procédé selon la revendication 2, sachant que le refus comprend l'interdiction d'envoyer l'information par le noeud de réseau (K1 ... 5) au premier noeud de réseau (K1 ...5).

4. Procédé selon la revendication 2 ou 3, sachant qu'on procède à la détermination de l'exigence en matière de sécurité à l'aide d'un type de message, en particulier à l'aide d'au moins un des types suivants :
- une information déterminée pour le premier noeud de réseau (K1 ... 5) ;
- une information destinée au transfert par le premier noeud de réseau (K1 ... 5) ;
- une information de routage, en particulier une information de demande de routage ou une information de réponse de routage ;
- une information d'un autre noeud de réseau (K1 ... 5) non maillé aux fins du transfert dans un réseau maillé.

5. Procédé selon la revendication 1, sachant que la tâche comporte un transfert d'une information d'un noeud de réseau (K1 ... 5) par le premier noeud de réseau.

6. Procédé selon la revendication 5, sachant que le refus comporte le non-enregistrement et/ou la suppression du noeud de réseau (K1 ...5) d'une table de réacheminement du noeud de réseau (K1 ... 5).

7. Procédé selon l'une quelconque des revendications 2 à 6, sachant qu'on procède au contrôle grâce au noeud de réseau (K1 ... 5).

8. Procédé selon l'une quelconque des revendications précédentes, sachant qu'on utilise pour le contrôle de l'exigence en matière de sécurité, un certificat du premier noeud de réseau (K1 ... 5), en particulier un certificat selon la norme X.509v3.

9. Procédé selon la revendication 8, sachant que le certificat présente des attributs, à l'aide desquels on procède au contrôle.

10. Procédé selon l'une quelconque des revendications précédentes, sachant qu'on utilise comme autorisation de tâche une classe de noeud de réseau, en particulier une des classes de noeud de réseau qui suit :
- le point de maillage ;
- le point d'accès de maillage ;
- le point de maillage léger ;
- la station ;
- le portail de maillage.

11. Noeud de réseau (K1 ... 5) comportant une unité de traitement, lequel est configuré de telle manière qu'aux fins de la détermination d'une autorisation de tâche pour une tâche pour un premier noeud de réseau (K1 ... 5), on procède à la détermination d'une exigence en matière de sécurité associée à la tâche, on contrôle si le premier noeud de réseau (K1 ... 5) répond à l'exigence en matière de sécurité sachant qu'on détermine si le premier noeud de réseau (K1 ... 5) est en mesure de prendre en charge la tâche, et, si ce n'est pas le cas, on peut procéder à un refus d'autorisation de tâche pour le premier noeud de réseau (K1 ... 5) et on peut procéder à la recherche d'un autre noeud de réseau pour la tâche.

12. Noeud de réseau (K1 ... 5) selon la revendication 11, sachant que le refus comporte le non-enregistrement ou la suppression du premier noeud de réseau (K1 ... 5) d'une table de réacheminement du noeud de réseau (K1 ... 5).

13. Noeud de réseau (K1 ... 5) selon la revendication 11, sachant que la tâche comporte la réception d'une information à transmettre par un noeud de réseau (K1 ... 5) au premier noeud de réseau (K1 ... 5) et que le refus comprend une interdiction d'envoyer l'information à transmettre.

14. Réseau comportant au moins un noeud de réseau (K1 ... 5) selon l'une quelconque des revendications 11 à 13.

15. Réseau selon la revendication 14, configuré comme un réseau ad hoc ou un réseau maillé.
